**Europäisches Patentamt**

**European Patent Office**

**Office européen des brevets**

(11) Veröffentlichungsnummer: **0 255 739**
**A1**

## (12) EUROPÄISCHE PATENTANMELDUNG

(21) Anmeldenummer: **87201276.0**

(22) Anmeldetag: **04.07.87**

(51) Int. Cl.⁴: **A01K 1/00 , E04C 2/18**

(30) Priorität: **28.07.86 NL 8601935**

(43) Veröffentlichungstag der Anmeldung:
**10.02.88 Patentblatt 88/06**

(84) Benannte Vertragsstaaten:
**AT BE CH DE ES FR GB GR IT LI LU NL SE**

(71) Anmelder: **van Dijk, Jacques**
**Prinses Beatrixstraat 14**
**NL-6585 XN Mook(NL)**

(72) Erfinder: **van Dijk, Jacques**
**Prinses Beatrixstraat 14**
**NL-6585 XN Mook(NL)**

(74) Vertreter: **Timmermans, Anthonius C.Th., Ir. et al**
**European Patent Attorneys Octrooibureau**
**Zuid P.O. Box 2287**
**NL-5600 CG Eindhoven(NL)**

(54) **Lüftende Decke und Paneele dafür.**

(57) Decke für einen zu lüftenden Raum, in dem sie eine Luftdurchlaßfunktion erfüllt, die über gesamte oder nahezu gesamte Oberfläche aus Paneelen (10) besteht, die aus luftdurchlässigem, gepreßtem Fasermaterial bestehen.

FIG.7

## Lüftende Decke und Paneele dafür

Die Erfindung betrifft eine Decke für einen zu lüftenden Raum, in dem sie eine Luftdurchlaßfunktion erfüllt. Die Erfindung betrifft ebenfalls ein Paneel zur Herstellung einer solchen Decke und bautechnische Konstruktionen, in denen solche Decken verwendet sind.

Beim Belüften von Räumen ergibt sich das Problem, daß Zug entsteht, namentlich in der Nähe von Gittern oder anderen Öffnungen in den Decken, insbesondere wenn dadurch kalte Luft einritt, was bei Belüftung mit Kaltluft von oben der Fall ist. Dabei hat die Kaltluft, die durch die Öffnungen mit einer bestimmten Geschwindigkeit eintritt, die Neigung zum "Fallen". Dieses Problem wird grundsätzlich dadurch verursacht, daß der Luftstrom nicht gleichmäßig auf die ganze Oberfläche verteilt zugeführt wird.

Erfindungsgemäß wird eine Verbesserung erzielt, indem die Decke über ihre gesamte oder nahezu über ihre gesamte Fläche mit Paneelen ausgeführt wird, die aus luftdurchlässigem Fasermaterial hergestellt sind.

Vorzugsweise werden die Paneele dabei aus gepreßtem mit Zement umhülltem Holzfasermaterial gefertigt. Diese Paneele, die als Holzwolzementpaneele bezeichnet werden, haben sich als für den beabsichtigten Zweck hervorragend geeignet erwiesen. Sie bestehen aus Holzwolle, die in Zement eingebettet ist. Die einzelnen "Späne" (Faser von l bis l0 mm Breite, 5 bis 50 cm Länge und 0,5 bis 3 mm Stärke) werden dabei mit einer Schicht aus Zement und Wasser in einem Mischgerät umgeben. Diese Masse wird daraufhin zu Paneelen gepreßt. Nach dem Preßvorgang entsteht eine Struktur mit niedrigem Füllfaktor, etwa 50 Volumenprozente der Paneele bestehen aus Luft. Trotzdem haben diese Paneele eine große selbsttragende Fähigkeit. Sie können bis zu einer Länge von etwa einem Meter selbsttragend ausgeführt werden. Weiter lassen sie Luft ausgezeichnet durch, nehmen nahezu keine Feuchte auf und haben eine homogene Zusammensetzung. Es hat sich gezeigt, daß bei einem Überdruck von 2 mm Wassersäule ein Volumen von l00 m3 Luft pro Stunde pro m2 Paneeloberfläche durchgelassen wird.

In einer Vorzugsausführungsform werden die Paneele an ihrer Oberseite mit einer Filtrierschicht aus Mineralwolle, Steinwolle, Glaswolle oder ähnlichem versehen.

Wenn größere Spannweiten als etwa l Meter überspannt werden müssen, bringt man vorzugsweise an zwei Längsseiten der Paneele Leisten an. Diese können aus Holz sein und durch Vernieten mit den Paneelen verbunden sein, wobei das Filtriermaterial dann zwischen den Leisten angebracht sein kann, so daß sich dieses nicht verschieben kann.

Zur Überspannung noch größerer Spannweiten können auch Leisten mit U-förmigem Querschnitt verwendet werden. Diese können aus Metall sein, werden jedoch vorzugsweise aus glasfaserverstärktem Epoxidharz gefertigt und mit einem Kunststoffschaum wie Polyurethanschaum gefüllt.

Zur Fixierung der genannten Filtrierschicht werden darüber Drähte, beispielsweise Metalldrähte, gespannt. Dies ist namentlich für den Transport der Paneele von Bedeutung.

Eine günstige Ausführungsform von Paneelen, die mit Leisten versehen sind, kennzeichnet sich dadurch, daß die Leisten an ihren Seiten mit Löchern versehen sind, in die Paßstifte zur Verbindung der Paneele miteinander eingesetzt werden können. Vorzugsweise wird weiter eine der beiden Leisten eines Paneels höher ausgeführt als die andere, und zwar höher als die kombinierte Stärke des Fasermaterials und des Filtriermaterials. Dies hat nicht nur Vorteile hinsichtlich der Festigkeit der Paneele, sondern erleichtert auch das Stapeln, wie unten näher beschrieben wird. Der über das Paneel hinausragende Rand kann auch zur Befestigung von Aufhängebügeln in dazu in den Leisten angebrachten Löchern dienen.

Die Anwendung der Decken und der Paneele zu ihrer Konstruktion ist vor allem günstig in bautechnischen Konstuktionen wie Tierställen. Eine solche Konstruktion kann dann mit Aubsaugmitteln im Boden versehen sein, so daß im Raum ein gewisser Unterdruck entsteht und Luft durch die Decke angesaugt wird. Auch ist es möglich, für die Luftzufuhr einen Spezialraum vorzusehen, der mit einem Raum über der Decke in Verbindung steht. In einem solchen Raum kann beispielsweise ein Ventilator aufgestellt werden. Als gesonderter Raum kann auch ein neben dem zu belüftenden Raum gelegener Flur dienen. Dort können dann auch andere Luftbehandlungsmittel aufgestellt werden, zur Regelung der Temperatur, der Luftfeuchte und anderes mehr.

Die Erfindung wird an Hand einer Beschreibung und einer Zeichnung einer Reihe von Ausführungsformen erläutert.

In der Zeichnung zeigt

Fig. l eine schematische Wiedergabe im Querschnitt einer bautechnischen Konstruktion mit einer erfindungsgemäßen Decke.

Fig. 2 ein Querschnitt einer Vorzugsausführungsform eines Paneels für eine erfindungsgemäße Decke.

Fig. 3 ein Querschnitt einer anderen Ausführungsform eines solchen Paneels.

Fig. 4 und 5 Querschnitte von Seitenleisten für ein solches Paneel.

Fig. 6 eine Oberansicht eines Paneels für eine erfindungsgemäße Decke.

Fig. 7 eine Perspektivansicht einer erfindungsgemäßen Decke in einer anderen Ausführungsform und

Fig. 8 eine Perspektivansicht gestapelter Paneele für die in Fig. 7 wiedergegebene Ausführungsform.

In Fig. I ist mit I ein Raum in einer bautechnischen Konstruktion wie einem Tierstall angegeben, in dem eine luftdurchlässige, aus Paneelen bestehende Decke 2 angebracht ist. Neben dem Raum I befindet sich ein Raum 3, zum Beispiel ein Flur, der mit einem Raum 4 über der Decke 2 in offener Verbindung steht. In der Seitenwand 5 der Konstruktion sind Belüftungsöffnungen 6 angebracht, durch die Luft eintreten kann, wie mit Pfeil A angegeben. Zwischen den Räumen 3 und 4 können ein oder mehrere Ventilatoren 7 aufgestellt sein, die Luft aus dem Raum 3 ansaugen, wenn beabsichtigt wird, Luft unter einem gewissen Überdruck aus Raum 4 durch die Decke 2 hindurch in den Raum I einzuleiten. Die Pfeile B geben die Luftbewegung durch die Decke 2 an. Es ist jedoch auch möglich, Luft durch Lüftungsgitter 8 im Boden des Raums I abzusaugen (Pfeile C). In dem Fall können die Ventilatoren 7 entfallen und entsteht ein Unterdruck in den Räumen I und 4. Im Raum 3 neben Raum I wird die durch die Öffnungen 2 eintretende Luft mit der dort vorhandenen Luft vermischt. Dieser Raum kann zur Aufstellung von Luftbehandlungsgeräten (nicht dargestellt) zur Regelung der Temperatur und der Luftfeuchte genutzt werden.

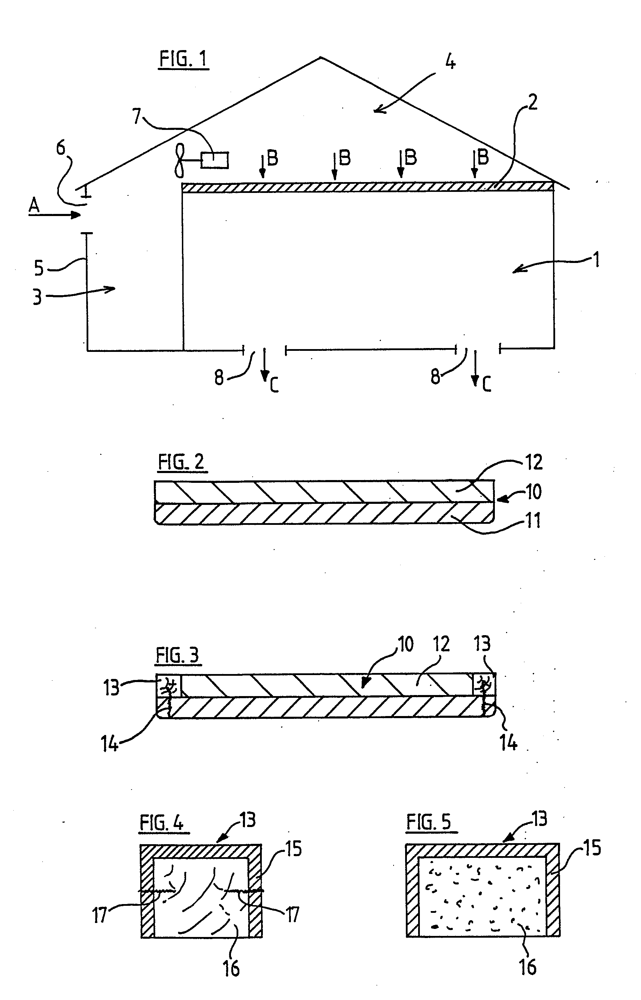

Die Paneele I0, aus denen die Decke 2 aufgebaut ist, können die in Figur 2 wiedergegebenen Form haben. Darin ist mit II eine Holzwollzementplatte angegeben, die das eigentliche Paneel bildet. Darauf ist eine Schicht I2 eines Filtriermaterials, wie beispielsweise Mineralwolle, Glaswolle oder Steinwolle angebracht, die zur Reinigung der durch das Paneel I0 hindurchgesaugte oder - gepreßte dient.

In der Variante nach Figur 3 ist die Holzwollzementplatte II des Paneels I0 mit zwei hölzernen Seitenleisten I3 versehen, die mit der Platte II mittels Nieten I4 verbunden sind. Die Seitenleisten I3 können auch als um die hölzernen Leisten I6 angebrachte, aus dünnem Material gefertigte U-Profile I5 gestaltet sein, die mit Nieten I7 miteinander verbunden sind. Auch kann ein aus glasfaserverstärktem Epoxidharz gefertigtes U-Profil I5 verwendet werden, das mit einem schaumbildenden Kunststoffmaterial I6 gefüllt ist, wie in Figur 5 angegeben.

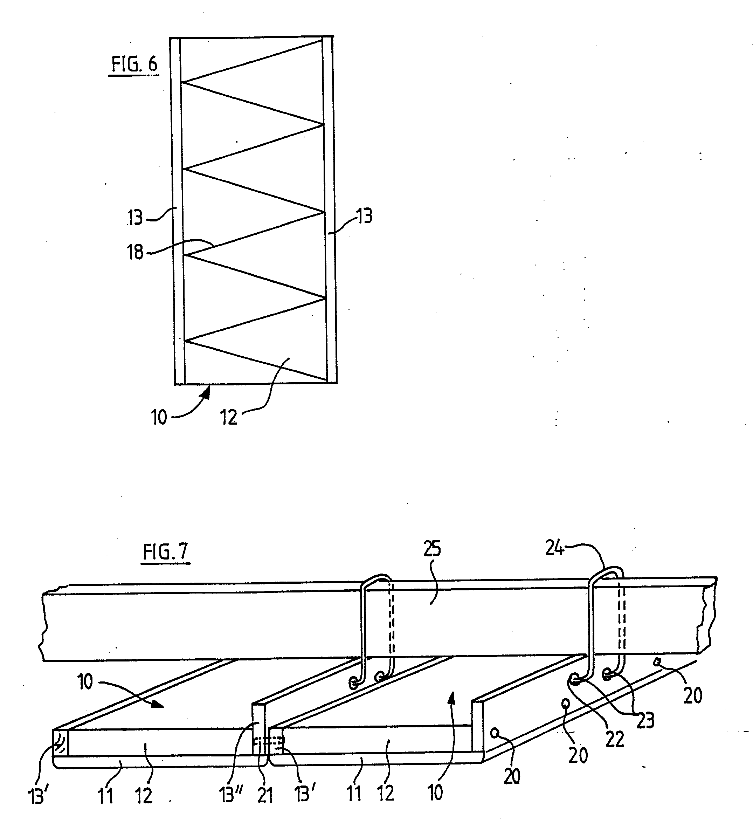

Zum Festhalten des Filtermaterials I2 an dem Paneel I0, beispielsweise während des Transports des Paneels, kann man über das Material drähte wie Metalldrähte I8 spannen, die an den Leisten I3 auf die in Fig. 6 gezeigte Weise befestigt sind. Die Drähte werde vorzugsweise im Zickzack angebracht.

In Fig. 7 ist ein Vorzugsausführungsform des Paneels wiedergegeben mit einer dazu bestimmten Aufhängevorrichtung. Die Leisten sind dabei in unterschiedlicher Höhe ausgeführt (Leisten I3' und I3"), Die Leiste I3" ist dabei höher als die kombinierte Höhe der Platte II und der Filtrierschicht I2. In den Leisten I3' und I3" sind Löcher 20 angebracht, in die Paßstifte 2I eingesteckt werden können, mit denen die Paneele I0 miteinander verbunden werden können. Weiter sind in den Leisten I3" in regelmäßigen Abständen Löcherpaare 22 angebracht, in die die umgebeugten Enden 23 U-förmiger Bügel 24 eingesteck werden können. Die Bügel 24 werden um einen Balken 25 einer Dachkonstruktion angebracht, womit eine Aufhängekonstruktion für die gesamte Decke erhalten worden ist.

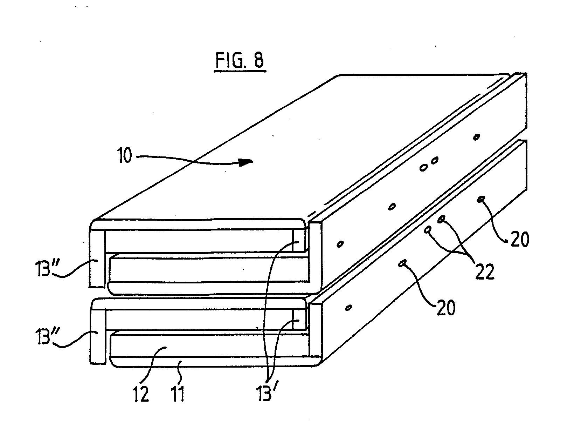

Diese letzte Ausführungsform des Paneels eignet sich sehr gut zur Stapelung zu Transportzwecken. Zwei Paneele werden dazu mit ihren oberen Flächen aufeinander gelegt, wie in Fig. 8 gezeigt. Ausführungen mit armierten Holzwollzementplatten, bei denen Latten in das Paneel eingepreßt worden sind, sind ebenfalls Bestandteil der Erfindung, wie auch magnesitgebundene, gips-zementgebundene und Kunstharzgebunde Holzwollpaneele. Erfindungsgemäß können die Leisten mit einem dünnwandigen metallenen U-förmigen Profil umgeben sein, von dem ein oder beide Beine umgeflazt worden sind, so daß die Holzleiste an drei Seiten vollständig und an einer Seite teilweise von einem Metallkasten umgeben ist, wodurch eine größere Festigkeit der Konstruktion entsteht. Auch andere Paneele, die aufgrund einer schweren Pressung eine größere Dichte haben können, und Paneele mit aufgrund einer leichteren Pressung geringerer Dichte, sind Bestandteil der Erfindung und können bei einem Druck von 2 mm Wassersäule eine Luftdurchlässigkeit von 50 bis 400 m3 pro Stunde pro m2 haben.

Die erfindungsgemäßen Decken und Paneele können in Sporthallen, in Nutzbauten (Krankenhäuser, Bürogebäude, Schulen usw.) sowie im Wohnungsbau angewandt werden.

**Ansprüche**

I. Decke für einen zu lüftenden Raum, in dem sie eine Luftdurchlaßfunktion erfüllt, dadurch gekennzeichnet, daß sie über ihre gesamte oder nahezu gesamte Oberfläche aus Paneelen (l0) besteht, die aus luftdurchlässigem gepreßtem Fasermaterial bestehen.

2. Decke nach Anspruch l, dadurch gekennzeichnet, daß die Paneele aus gepreßtem mit Zement umhülltem Holzfasermaterial gefertigt sind.

3. Decke nach Anspruch l oder 2, dadurch gekennzeichnet, daß die Paneele (l0) wenigstens etwa 50 volumenprozente Luft enthalten.

4. Decke nach einem der vorigen Ansprüche, dadurch gekennzeichnet, daß die Paneele (l0) eine biegungsbeanspruchte Länge von etwa einem Meter haben.

5. Decke nach einem der vorigen Ansprüche, dadurch gekennzeichnet, daß die Paneele an ihrer Oberseite mit einer Filtrierschicht aus Mineralwolle, Steinwolle, Glaswolle oder ähnlichem versehen sind.

6. Decke nach einem der vorigen Ansprüche, dadurch gekennzeichnet, daß an wenigstens zwei Längsseiten der Paneele (l0) Leisten (l3) angebracht sind.

7. Decke nach Anspruch 6, dadurch gekennzeichnet, daß die Paneele (l0) mit den Leisten (l3) mittels Nieten (l4) verbunden sind und daß zwischen den Leisten Filtriermaterial (l2) angebracht ist.

8. Decke nach Anspruch 6 oder 7, dadurch gekennzeichnet, daß die Leisten aus U-förmigen Profilen (l5) bestehen.

9. Decke nach Anspruch 8, dadurch gekennzeichnet, daß die Profile (25) aus glasfaserverstärktem Epoxidharz gefertigt und mit Polyurethanschaum oder einem anderen schaumbildenden Material (l6) gefüllt sind.

l0. Decke nach einem der Ansprüche 7-9, dadurch gekennzeichnet, daß zur Fixierung des genannten Filtriermaterials darüber Drähte (l8) gespannt sind, die an den Leisten befestigt sind.

ll. Decke nach einem der Ansprüche 6-l0, dadurch gekennzeichnet, daß die Leisten (l3) an ihren Seiten mit Löchern (20) versehen sind, in die Paßstifte (2l) zur Verbindung der Paneele (l0) miteinander eingesetzt werden können.

l2. Decke nach einem der Ansprüche 6-ll, dadurch gekennzeichnet, daß eine der beiden Leisten (l3' l3") eines Paneels (l0) höher ausgeführt ist als die andere, und zwar höher als die kombinierte Stärke des Fasermaterials (ll) und des Filtriermaterials (l2).

l3. Decke nach Anspruch l2, dadurch gekennzeichnet, daß in die oberen Paneele (l0) hinausragende Teile der höchsten der Leisten (l3") Löcher (22) für Aufhängebügel (24) angebracht sind, mit denen die Paneele (l0) an einer sich über der Decke befindenden Balkenkonstruktion (25) oder ähnlichem aufgehängt werden kön nen.

l4. Paneel für die Konstruktion einer Decke (2) nach einem der vorigen Ansprüche.

l5. Bautechnische Konstruktion wie ein Tierstall, dadurch gekennzeichnet, daß sie einer Decke (2) nach einem der Ansprüche l-l3 versehen ist.

l6. Bautechnische Konstruktion nach Anspruch l5, dadurch gekennzeichnet, daß sie ebenfalls mit Luftabsaugmitteln (8) im Boden versehen ist.

l7. Bautechnische Konstruktion nach Anspruch l5 oder l6, dadurch gekennzeichnet, daß für die Luftzufuhr ein gesonderter Raum (3) vorhanden ist, der mit einem Raum (4) über der Decke (2) in Verbindung steht.

l8. Bautechnische Konstruktion nach Anspruch l7, dadurch gekennzeichnet, daß sich dieser Raum (3) neben dem zu belüftenden Raum (l) befindet.

l9. Bautechnische Konstruktion nach Anspruch l7 oder l8, dadurch gekennzeichnet, daß im gesonderten Raum (3) Luftbehandlungsmittel zur Regelung der Temperatur, der Luftfeuchte und anderes mehr anwesend sind.

FIG. 1

FIG. 2

FIG. 3

FIG. 4

FIG. 5

FIG. 6

FIG.7

## FIG. 8

# EUROPÄISCHER RECHERCHENBERICHT

Nummer der Anmeldung

EP 87 20 1276

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 413 582 (HÖLSCHER & LEUSCHNER) * Figuren 3,4; Seite 3, Zeilen 4-23; Seite 7, Zeilen 8-20 * | 1,5,15 | A 01 K 1/00 E 04 C 2/18 |
| | --- | | |
| A | CH-A- 348 535 (BRAUNBOCK) * Figuren 1-3; Seite 1, Zeilen 1-60 * | 2,6,8, 11,14 | |
| | --- | | |
| A | US-A-4 320 719 (CLEMMESEN) * Spalte 1, Zeilen 41-48 * | 16 | |
| | --- | | |
| A | US-A-3 581 649 (RAUENHORST) * Figuren 1,2; Spalte 1, Zeilen 15-28,56-75 * | 17,19 | |
| | ----- | | |

RECHERCHIERTE SACHGEBIETE (Int. Cl.4)

A 01 K
E 04 C

Der vorliegende Recherchenbericht wurde für alle Patentansprüche erstellt.

| Recherchenort | Abschlußdatum der Recherche | Prüfer |
|---|---|---|
| DEN HAAG | 03-11-1987 | VILBIG K |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82